(19) Europäisches Patentamt
European Patent Office
Office européen des brevets

(11) EP 2 868 721 B1

(12) **EUROPEAN PATENT SPECIFICATION**

(45) Date of publication and mention of the grant of the patent:
**17.01.2018 Bulletin 2018/03**

(51) Int Cl.:
***C09D 11/101*** *(2014.01)* ***C09D 11/322*** *(2014.01)*
***C09D 11/40*** *(2014.01)*

(21) Application number: **13190628.1**

(22) Date of filing: **29.10.2013**

(54) **Radiation curable brown inkjet ink**

Strahlungshärtbare braune Tintenstrahltinte

Encre à jet d'encre brun durcissable par rayonnement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.05.2015 Bulletin 2015/19**

(73) Proprietor: **AGFA NV**
**2640 Mortsel (BE)**

(72) Inventor: **De Mondt, Roel**
**2640 Mortsel (BE)**

(74) Representative: **Strijckers, Hans Louis P.**
**AGFA NV**
**Intellectual Property Department**
**Septestraat 27**
**2640 Mortsel (BE)**

(56) References cited:
**EP-A1- 1 669 193** **EP-A1- 2 604 663**
**DE-A1- 19 924 381** **US-A- 4 105 806**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 868 721 B1

## Description

### Technical Field

The present invention relates to a radiation curable brown inkjet ink, an inkjet ink set and a method for inkjet printing using the same.

### Background Art

Offset and flexographic printing systems are being increasingly replaced for printing applications by industrial inkjet printing systems due to their flexibility in use, e.g. variable data printing, and due to their enhanced reliability, allowing their incorporation into production lines. Radiation curable inkjet inks are particularly preferred because contrary to aqueous inkjet inks high quality images can also be printed on non-absorbing ink-receivers.

UV curable inkjet inks have been developed for primary food packaging applications, as exemplified by EP 2053101 A (AGFA), EP 2199273 A (AGFA) and EP 2161290 A (AGFA) .

Legislation requires that packaged foods list each ingredient used in the product, including any additives or preservatives, in order, beginning with the most used ingredient and ending with the ingredient used the least. The law also requires that specific nutritional information, such as calories and the content of fat and sugar, is mentioned on the package. Recently, the law requested that batch numbers for traceability and recall purposes, as well as manufacturing and expiration dates, are mentioned on food packaging. Furthermore in Europe, such information needs to be mentioned in the official languages of the countries where the product is to be sold. Due to the new legal requirements for food packaging, the amount of information has increased to a level where it has become impossible to include it in all languages on small food packaging, such as a chocolate bar wrapper.

Food manufacturers have turned to industrial inkjet printing technology for being able to rapidly change the language of the legally required information during manufacturing, depending on the destination country of the food matter being packaged.

Most inkjet printing systems use CMYK ink sets, i.e. using a cyan ink (C), magenta ink (M), yellow ink (Y) and black ink (K). However, it has been found difficult to accurately reproduce the brown colour of chocolate using a CMYK inset. US 2011045252 A (PROCTER) disclosing the manufacturing of a web material comprising brown ink using an offset printing process (Fig.3) or a flexographic printing process (Fig.4) confirms in [0003] the difficulties experienced for accurately reproducing brown colour.

US 2006293412 A (ICF TECHNOLOGY CO) discloses a solvent based ultra violet radiation curable ink for which C.I. Pigment Brown 24 is listed as suitable pigment. C.I. Pigment Brown 24 is an inorganic pigment $(Ti,Cr,Sb)O_2$, but the presence of the heavy metals chromium and antimony have withheld manufacturers from employing it for food packaging purposes, mainly also due to legal requirements (see e.g. Resolution AP(89) 1 from the Council of Europe of 13 september 1989 on the use of colorants in plastic materials coming into contact with food). Furthermore inorganic colour pigments tend to sediment more than their organic counterparts giving rise to reliability issues in an industrial printing environment.

US 2013063535 (SEIKO EPSON) discloses a photocurable ink jet recording ink composition having a low viscosity and excellent curing property and photopolymerization initiator solubility. Although no specific examples are given, the pigments C.I. Pigment Brown 3, 5, 25, and 26 are listed as suitable colour pigments for the inkjet ink and that these pigments may be used alone or in a combination of two or more thereof. Inks including as sole pigment one of C.I. Pigment Brown 3, 5, 25, and 26. For example, Pigment Brown 25 affords a reddish shade of brown not resembling a brown chocolate colour.

US4105806 (AMERICAN CAN CO) discloses photoinitiator-free inks and a method of producing printed and varnished surfaces by depositing a base film or printing on a substrate and depositing, wet-on-wet, a protective varnish or top coat after which the multilayers are exposed to an energy source, preferably to electromagnetic radiation, to simultaneously cure the varnish and ink on said substrate.

DE19924381 A1 (DSM) discloses a radiation-curable ink composition containing a radiation-curable carrier system containing at least one radiation-curable monomer or oligomer and at least one pigment dispersed in the radiation-curable carrier system in an amount sufficient to provide a color which is visible without magnification, wherein the pigment has a particle size that substantially avoids pigment induced microbending of an optical glass fiber coated with the ink coating.

EP1669193 A1 (DAINIPPON PRINTING CO) discloses a decorative material comprising at least a substrate, a low-luster pattern ink layer partially formed on the substrate, and a surface protective layer which is present on and contacted with the low-luster pattern ink layer so as to cover a whole surface including both a region where the low-luster pattern ink layer is formed and a region where no low-luster pattern ink layer is formed, wherein the surface protective layer is formed by crosslinking and curing an ionizing radiation-curable resin composition, and provided therein

with a low-gloss region which is located in a portion just above the low-luster pattern ink layer and in the vicinity of the portion and visually recognized as a concave portion.

EP2604663 A1 (AGFA) discloses a radiation curable liquid including at least one free radical polymerizable monomer or oligomer, at least one diffusion hindered acetalysation catalyst and at least one diffusion hindered hydroxyl containing compound. The radiation curable liquid applied to a substrate prevents migration of very low viscous monomers, such as vinyl ether acrylate monomers, into the substrate.

Hence, there is a need for an improved radiation curable brown inkjet ink, especially for food packaging purposes, which is capable of reproducing accurately brown colour, such as the colour of chocolate.

## Summary of invention

In order to overcome the problems described above, preferred embodiments of the present invention have been realised with a radiation curable brown inkjet ink as defined by **claim 1.**

It was found that a radiation curable brown inkjet ink reproducing accurately brown chocolate colour could be prepared by mixing concentrated cyan, magenta and yellow pigment dispersions for addressing the hue, and the addition of a concentrated black pigment dispersion for addressing the darkness of the brown colour.

One advantage of the radiation curable brown inkjet ink is an improved productivity in manufacturing of radiation curable inkjet inks. A radiation curable inkjet ink is generally prepared by first making a concentrated pigment dispersion, usually by milling the pigment, and is then diluted into the inkjet ink by adding the other components, such as photoinitiators, surfactants and other monomers. By preparing the radiation curable brown inkjet ink using concentrated cyan, magenta, yellow and black pigment dispersions employed for manufacturing CMYK inks, no extra milling or cleaning process is necessary for preparing a concentrated brown pigment dispersion.

Another advantage is an improved flexibility of the printed food packaging material for e.g. a chocolate bar, since the brown colour is designed to be printed in pure form with no overlaying colours.

Another advantage is the sharpness of the printed brown image. If the above mentioned ingredient and nutritional information is printed by using CMYK inks, the text sharpness on food packaging is observed to be inferior to that obtained by using a single brown inkjet ink.

Further objects of the invention will become apparent from the description hereinafter.

### Definitions

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a $C_1$ to $C_6$-alkyl group.

Unless otherwise specified a substituted or unsubstituted alkenyl group is preferably a $C_1$ to $C_6$-alkenyl group.

Unless otherwise specified a substituted or unsubstituted alkynyl group is preferably a $C_1$ to $C_6$-alkynyl group.

Unless otherwise specified a substituted or unsubstituted aralkyl group is preferably a phenyl or naphthyl group including one, two, three or more $C_1$ to $C_6$-alkyl groups.

Unless otherwise specified a substituted or unsubstituted alkaryl group is preferably a $C_7$ to $C_{20}$-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester group, amide group, ether group, thioether group, ketone group, aldehyde group, sulfoxide group, sulfone group, sulfonate ester group, sulphonamide group, -Cl, -Br, -I, -OH, -SH, -CN and $-NO_2$.

### Radiation Curable Brown Inkjet Inks

The radiation curable brown inkjet ink according to the present invention contains a mixture of colour pigments

but substantially lacks a brown pigment. The wording "substantially lacks a brown pigment" means that 0 to 40 wt% of a brown pigment, preferably 0 to 30 wt% of a brown pigment, more preferably 0 to 20 wt% and most preferably 0 to10 wt% of a brown pigment is present in the inkjet ink, all based on the total weight of the mixture of pigments in the inkjet ink

In the most preferred embodiment, the radiation curable brown inkjet ink contains a mixture of colour pigments but lacks a brown pigment.

In a preferred embodiment of the radiation curable brown inkjet ink, the mixture of colour pigments includes a cyan pigment, a magenta pigment, a yellow pigment and a black pigment.

The mixture of colour pigments in the radiation curable brown inkjet ink preferably consists of carbon black and organic colour pigments.

The radiation curable brown inkjet ink preferably includes at least a copper phtalocyanine pigment in the mixture of colour pigments.

The radiation curable brown inkjet ink preferably includes at least one of a quinacridone and a diketopyrrolo pyrrole pigment in the mixture of colour pigments.

The radiation curable brown inkjet ink preferably includes in the mixture of colour pigments at least one yellow pigment selected from the group consisting of C.I. Pigment Yellow 120, C.I. Pigment Yellow 150, C.I. Pigment Yellow 155, C.I. Pigment Yellow 139, C.I. Pigment Yellow 151, C.I. Pigment Yellow 181 and C.I. Pigment Yellow 180.

The radiation curable brown inkjet ink preferably contains a dispersant, more preferably a polymeric dispersant, for dispersing the pigments. The radiation curable brown inkjet ink may also contain a dispersion synergist to improve the dispersion quality and stability of the ink. A mixture of dispersion synergists may be used to further improve dispersion stability.

The surface tension of the radiation curable brown inkjet ink is preferably from 20 to 50 mN/m at 25°C, more preferably from 22 to 30mN/m at 25°C. It is preferably 20 mN/m or more from the viewpoint of printability by a second radiation curable inkjet ink, and it is preferably not more than 30 mN/m from the viewpoint of the wettability.

For having a good ejecting ability, the viscosity of the radiation curable brown inkjet ink at the jetting temperature is preferably smaller than 30 mPa.s, more preferably smaller than 15 mPa.s, and most preferably between 1 and 10 mPa.s at a shear rate of 30 $s^{-1}$and a jetting temperature between 10 and 70°C.

The viscosity of radiation curable brown inkjet ink is preferably smaller than 35 mPa.s, preferably smaller than 28 mPa.s, and most preferably between 1 and 25 mPa.s at 25°C and at a shear rate of 30 $s^{-1}$.

The radiation curable brown inkjet ink may further also contain at least one inhibitor for improving the thermal stability of the ink.

The radiation curable brown inkjet ink may further also contain at least one surfactant for obtaining good spreading characteristics on a substrate.

The radiation curable brown inkjet ink preferably includes 60 to 95 wt% of polymerizable compounds, more preferably 70 to 90 wt% of polymerizable compounds based upon the total weight of the radiation curable brown inkjet ink.

## Inkjet Ink Sets

In a preferred embodiment, the radiation curable brown inkjet ink according to the invention is part of a radiation curable inkjet ink set, more preferably part of a radiation curable inkjet ink set including a plurality of non-brown inkjet inks. The radiation curable inkjet ink set preferably includes at least a cyan radiation curable inkjet ink, a magenta radiation curable inkjet ink, a yellow radiation curable inkjet ink and a black radiation curable inkjet ink.

The curable CMYK-ink set may also be extended with extra inks such as red, green, blue, and/or orange to further enlarge the colour gamut of the image. The CMYK-ink set may also be extended by the combination of the full density inkjet inks with light density inkjet inks. The combination of dark and light colour inks and/or black and grey inks improves the image quality by a lowered graininess.

In a very preferred embodiment of the radiation curable inkjet ink set, two or more of the colour pigments in the radiation curable brown inkjet ink are present in two or more of the non-brown inkjet inks of the radiation curable inkjet ink set, even more preferably all the colour pigments of the radiation curable brown inkjet ink are present in two or more of the non-brown inkjet inks of the radiation curable inkjet ink set. This has advantages not only in productivity, but also in image quality.

By using the same concentrated pigment dispersions in the radiation curable brown inkjet ink and two or more of the non-brown inkjet inks of the radiation curable inkjet ink set, a smaller stock of pigments and pigment dispersions can be kept. Also the number of cleaning operations of the dispersion manufacturing equipment goes down as there are less different types of concentrated pigment dispersions to be prepared.

Another advantage of using the same colour pigments in both the radiation curable brown inkjet ink and the other radiation curable inkjet inks of the inkjet ink set is that the fading does not result in distorted colour images, because the colour pigments fade away by light, ozone or other external factors such as T, humidity or combinations thereof with comparable fading speed contrary to e.g. an inorganic brown pigment.

The non-brown radiation curable inkjet inks preferably have similar or the same viscosities and surface tensions as the radiation curable brown inkjet ink.

The non-brown radiation curable inkjet inks preferably contains the same type or similar compounds as the radiation curable brown inkjet ink, such as monomers and oligomers, photoinitiators, co-initiators, dispersants, dispersion synergists, inhibitors, surfactants and the like.

The radiation curable inkjet ink set is preferably a free radical curable inkjet ink set.

Colour Pigments

The radiation curable brown inkjet ink according to the present invention and the non-brown inkjet inks of the radiation curable inkjet ink set may include pigments having a colour selected from the group consisting of black, white, cyan, magenta, yellow, red, orange, violet, blue, green, brown, and the like. A colour pigment may be chosen from those disclosed by HERBST, Willy, et al. Industrial Organic Pigments, Production, Properties, Applications. 3rd edition. Wiley - VCH , 2004. ISBN 3527305769.

Suitable pigments are disclosed in paragraphs [0128] to [0138] of WO 2008/074548 (AGFA GRAPHICS) .

Also mixed crystals may be used. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta RT-355-D from Ciba Specialty Chemicals.

The radiation curable brown inkjet ink contains a mixture of colour pigments, more preferably a mixture of a cyan or blue pigment, a magenta or red pigment, a yellow or orange pigment and a black pigment. The radiation curable brown inkjet ink most preferably contains a mixture of a cyan pigment, a magenta pigment, a yellow pigment and a black pigment.

The mixture of colour pigments of the radiation curable brown inkjet ink preferably includes a copper phtalocyanine pigment, preferably C.I. Pigment Blue 15:3 or C.I. Pigment Blue 15:4.

The mixture of colour pigments of the radiation curable brown inkjet ink preferably includes at least one of a quinacridone and a diketopyrrolo pyrrole pigment. Preferred pigments include C.I. Pigment Red 254, C.I. Pigment Red 57-1 and quinacridone pigments containing C.I. Pigment Violet 19.

The mixture of colour pigments of the radiation curable brown inkjet ink preferably includes at least one yellow pigment selected from the group consisting of C.I. Pigment Yellow 120, C.I. Pigment Yellow 139, C.I. Pigment Yellow 150, C.I. Pigment Yellow 155 and C.I. Pigment Yellow 180.

In the most preferred embodiment, the radiation curable brown inkjet ink contains a mixture of colour pigments but lacks a brown pigment. However, if a brown pigment then the brown pigment is preferably an organic colour pigment.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 μm, more preferably between 0.070 and 0.300 μm and particularly preferably between 0.080 and 0.200 μm. Most preferably, the numeric average pigment particle size is no larger than 0.200 μm. An average particle size smaller than 0.050 μm is less desirable for decreased fastness, but mainly also because very small pigment particles or individual pigment molecules thereof may still migrate into the food packaging applications. The average particle size of pigment particles is determined with a Brookhaven Instruments Particle Sizer BI90plus based upon the principle of dynamic light scattering. The ink is diluted with ethyl acetate to a pigment concentration of 0.002 wt%. The measurement settings of the BI90plus are: 5 runs at 23°C, angle of 90°, wavelength of 635 nm and graphics = correction function

The pigments are preferably present in the range of 0.01 to 15 %, more preferably in the range of 0.05 to 10 % by weight and most preferably in the range of 0.1 to 8 % by weight, each based on the total weight of the inkjet ink.

Polymeric Dispersants

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA GRAPHICS) incorporated herein as a specific reference.
The polymeric dispersant has preferably a number average molecular weight Mn between 500 and 30000, more preferably between 1500 and 10000.
The polymeric dispersant has preferably a weight average molecular weight Mw smaller than 100,000, more preferably smaller than 50,000 and most preferably smaller than 30,000.
The polymeric dispersant has preferably a polydispersity PD smaller than 2, more preferably smaller than 1.75 and most preferably smaller than 1.5.
Commercial examples of polymeric dispersants are the following:

- DISPERBYK™ dispersants available from BYK CHEMIE GMBH;
- SOLSPERSE™ dispersants available from NOVEON;
- TEGO™ DISPERS™ dispersants from EVONIK;
- EDAPLAN™ dispersants from MONZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

Particularly preferred polymeric dispersants include Solsperse™ dispersants from NOVEON, Efka™ dispersants from CIBA SPECIALTY CHEMICALS INC and Disperbyk™ dispersants from BYK CHEMIE GMBH. Particularly preferred dispersants are Solsperse™ 32000, 35000 and 39000 dispersants from NOVEON.
The polymeric dispersant is preferably used in an amount of 2 to 600 wt%, more preferably 5 to 200 wt%, most preferably 50 to 90 wt% based on the weight of the pigment.

<u>Dispersion Synergists</u>

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.
The dispersion synergist is preferably added in a smaller amount than the polymeric dispersant(s). The ratio of polymeric dispersant/dispersion synergist depends upon the pigment and should be determined experimentally. Typically the ratio wt% polymeric dispersant/wt% dispersion synergist is selected between 2:1 to 100:1, preferably between 2:1 and 20:1.
Suitable dispersion synergists that are commercially available include Solsperse™ 5000 and Solsperse™ 22000 from NOVEON.
Particular preferred pigments for the magenta ink used are a diketopyrrolopyrrole pigment or a quinacridone pigment. Suitable dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS).
In dispersing C.I. Pigment Blue 15:3, the use of a sulfonated Cu-phthalocyanine dispersion synergist, e.g. Solsperse™ 5000 from NOVEON is preferred. Suitable dispersion synergists for yellow inkjet inks include those disclosed in EP 1790697 A (AGFA GRAPHICS).

<u>Monomers and Oligomers</u>

The radiation curable brown inkjet ink according to the present invention and the non-brown inkjet inks of the radiation curable inkjet ink set include one or more monomers and/or oligomers.
Any monomer and oligomer capable of free radical polymerization may be used in the free radical radiation

curable inkjet ink.. The monomers and oligomers may have different degrees of polymerizable functionality, and a mixture including combinations of mono-, di-, tri-and higher polymerizable functionality monomers may be used. The viscosity of the radiation curable inkjet ink can be adjusted by varying the ratio between the monomers.

The monomers and oligomers used, especially for food packaging applications, are preferably purified compounds having no or almost no impurities, more particularly no toxic or carcinogenic impurities. The impurities are usually derivative compounds obtained during synthesis of the polymerizable compound. Purification methods are well-known to those skilled in the art of manufacturing monomers and oligomers. Sometimes, however, some compounds may be added deliberately to pure polymerizable compounds in harmless amounts, for example, polymerization inhibitors or stabilizers.

Particularly preferred monomers and oligomers are those listed in [0106] to [0115] in EP 1911814 A (AGFA) .

For reducing the amount of extractable compounds from a cured ink layer, preferably the free radical radiation curable inkjet ink includes a so-called vitrification control monomer.

In a preferred embodiment, the vitrification control monomer comprises at least one acrylate group and at least one ethylenically unsaturated group selected from the group consisting of a vinyl ether, an allyl ether and an allyl ester, a vinyl ether and an allyl ether being more preferred, a vinyl ether being the most preferred.

In a more preferred embodiment the vitrification control monomer is a monomer represented by Formula (M-I):

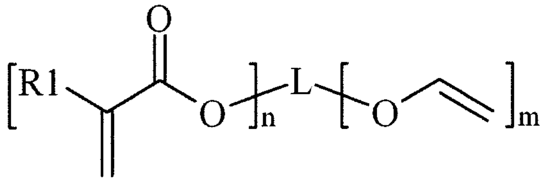

Formula (M-I)

wherein,

$R^1$ represents hydrogen, or a substituted or unsubstituted alkyl group, preferably a methyl group;
L represents a linking group comprising at least one carbon atom; and
n and m independently represent a value from 1 to 5.

In a preferred embodiment, the compound according to Formula (M-I) has $R^1$ representing hydrogen and n representing a value of 1. The value of m is preferably 1, 2 or 3. L preferably comprises 2, 3 or 4 carbon atoms.

Preferred vinylether acrylates are those disclosed in US 6310115 (AGFA), incorporated herein by reference. Particularly preferred compounds are 2-(2-vinyloxyethoxy)ethyl (meth)acrylate, most preferably the compound is 2-(2-vinyloxyethoxy)ethyl acrylate.

Other suitable vinylether (meth)acrylates are those disclosed in columns 3 and 4 of US 6767980 B (NIPPON SHOKUBAI), incorporated herein by specific reference and the folowing compound:

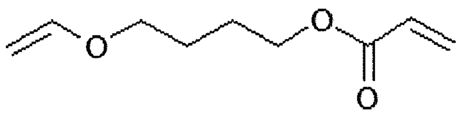

The vinylether acrylates can be prepared according to standard synthetic methods known to those skilled in the art of organic synthesis. Suitable synthetic methods are disclosed in US 6310115 (AGFA) and US 6767980 B (NIPPON SHOKUBAI) .

A single compound or a mixture of vinylether acrylates may be used.

A free radical radiation curable inkjet ink in a preferred embodiment of the present invention includes the vinylether (meth)acrylate preferably in an amount of at least 25 wt%, more preferably at least 30 wt% and most preferably at least 40 wt% based upon the total weight of the radiation curable composition used in the free radical radiation curable inkjet ink.

In a very preferred embodiment, the free radical radiation curable inkjet ink includes a polymerizable composition consisting essentially of:

a) 40 - 100 wt%, preferably 50 - 95 wt% of one or more vitrification control monomers A;
b) 0 - 55 wt% of one or more polymerizable compounds B selected from the group consisting of monofunctional

acrylates and difunctional acrylates; and

c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%; and wherein all weight percentages of A, B and C are based upon the total weight of the polymerizable composition.

In a preferred embodiment, the radiation curable brown inkjet ink includes at least one monomer selected from the group consisting of 2-(vinylethoxy)ethyl acrylate, N-vinyl caprolactam, phenoxyethyl acrylate, dipropyleneglycoldiacrylate, ethoxylated trimethylolpropane triacrylate and cyclic trimethylolpropane formal acrylate.

For achieving high printing speeds, preferably low viscous monomers so that a low viscosity for the free radical radiation curable inkjet ink can be obtained. However, in industrial inkjet printing also a high reliability is required which allows the incorporation of the inkjet printing system into a production line. In a preferred embodiment, the low viscous monomer loses less than 15 % of their weight when kept at 40°C for 100 hours in an open cubic vessel.

Photoinitiators and Co-initiators

The radiation curable brown inkjet ink is preferably curable by UV radiation. The radiation curable brown inkjet ink is preferably a free radical UV curable inkjet ink. It was found in industrial inkjet printing systems that cationically curable inkjet inks posed problems of jetting reliability due to UV stray light. UV stray light hitting the nozzle plate of an inkjet print head results into failing nozzles due to clogging by cured ink in the nozzle. Unlike free radical ink where radical species have a much shorter lifetime, the cationic curable ink continues to cure once an acid species has been generated by UV light in the nozzle

The radiation curable brown inkjet ink curable by UV radiation contains at least one photoinitiator, but may contain a photoinitiating system including a plurality of photoinitiators and/or co-initiators.

For primary food packaging applications, the radiation curable brown inkjet ink preferably includes at least one photoinitiator selected from the group consisting of polymerizable photoinitiators, polymeric photoinitiators and multifunctional photoinitiators. A multifunctional photoinitiator is a photoinitiator having two or more photoinitiating groups, e.g. two benzophenone groups and a thioxanthone group. In a more preferred embodiment, the radiation curable brown inkjet includes a polymerizable photoinitiator. Such a photoinitiator results in a smaller viscosity than a polymeric photoinitiator while still minimizing health risks in food packaging applications.

The photoinitiator in the free radical radiation curable inkjet ink is a free radical initiator, more specifically a Norrish type I initiator or a Norrish type II initiator. A free radical photoinitiator is a chemical compound that initiates polymerization of monomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator. Both type I and type II photoinitiators can be used in the present invention, alone or in combination. The free radical radiation curable inkjet ink preferably includes no cationic photoinitiator.

The polymerizable photoinitiators may be combined with other type of non-polymeric or non-polymerizable photoinitiators, preferably at concentration levels in the inkjet ink causing no health risks, e.g. due to migration into the foodstuff.

Suitable photoinitiators are disclosed in CRIVELLO, J.V., et al. Photoinitiators for Free Radical Cationic and Anionic Photopolymerization. 2nd edition. Edited by BRADLEY, G.. London, UK: John Wiley and Sons Ltd, 1998. p.287-294.

Specific examples of photoinitiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl)-2,4,4-trimethylpentylphosphine oxide, 2,4,6 trimethylbenzoyldiphenylphosphine oxide, 2,4,6-trimethoxybenzoyldiphenylphosphine oxide, 2-methyl-1- [4-(methylthio) phenyl] -2-morpholinopropan-1-one, 2,2-dimethoxy-1, 2-diphenylethan-1-one or 5,7-diiodo-3- butoxy-6-fluorone.

Suitable commercial photoinitiators include Irgacure™ 184, Irgacure™ 500, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd.

For a low migration radiation curable inkjet ink, the photoinitiator preferably consists of so-called diffusion hindered photoinitiator. A diffusion hindered photoinitiator is a photoinitiator which exhibits a much lower mobility in a cured layer of the radiation curable inkjet ink than a monofunctional photoinitiator, such as benzophenone. Several

methods can be used to lower the mobility of the photoinitiator. One way is to increase the molecular weight of the photoinitiators so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators.

The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators.

Most preferably the photoinitiators in the radiation curable inkjet ink consist of one or more diffusion hindered photoinitiators, preferably one or more polymerizable or polymeric photoinitiators, and more preferably polymerizable photoinitiators.

Preferred diffusion hindered photoinitiators contain one or more photoinitiating functional groups derived from a Norrish type I-photoinitiator selected from the group consisting of benzoinethers, benzil ketals, $\alpha$,$\alpha$-dialkoxyacetophenones, $\alpha$-hydroxyalkylphenones, $\alpha$-aminoalkylphenones, acylphosphine oxides, acylphosphine sulphides, $\alpha$-haloketones, $\alpha$-halosulfones and phenylglyoxalates.

Preferred diffusion hindered photoinitiators contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators. Other preferred polymerizable photoinitiators are those disclosed in EP 2161264 A (AGFA).

In a photoinitiating system, one of the photoinitiators can also function as a sensitizer enhancing the reactivity of another photoinitiator. Preferred sensitizers are polymerizable sensitizers such as those disclosed in EP 2053095 A (FUJIFILM) .

A preferred amount of photoinitiator is 0 - 50 wt%, more preferably 0.1 - 20 wt%, and most preferably 0.3 - 15 wt% of the total weight of the radiation curable inkjet ink.

In a very preferred embodiment, the radiation curable inkjet ink includes a polymerizable or polymeric thioxanthone photoinitiator and an acylphosphine oxide-based polymerization photoinitiator, more preferably a bis(2,4,6-trimethylbenzoyl)-phenylphosphineoxide photoinitiator.

Photoinitiators like bis(2,4,6-trimethylbenzoyl)-phenylphosphineoxide photoinitiator are monofunctional but are allowed by the Swiss ordinance SR 817.023.21 on Objects and Materials due to their very low toxicity level.

In order to increase the photosensitivity further, the free radical radiation curable inkjet ink may additionally contain co-initiators. Suitable examples of co-initiators can be categorized in three groups: 1) tertiary aliphatic amines such as methyldiethanolamine, dimethylethanolamine, triethanolamine, triethylamine and N-methylmorpholine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and (3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate). The preferred co-initiators are aminobenzoates.

When one or more co-initiators are included into the radiation curable inkjet ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

Some co-initiators, like ethylhexyl-4-dimethylaminobenzoate, are not diffusion hindered co-initiators but are allowed by the Swiss ordinance SR 817.023.21 on Objects and Materials due to their very low toxicity level. In a preferred embodiment, the free radical radiation curable inkjet ink includes ethylhexyl-4-dimethylaminobenzoate as co-initiator.

The free radical radiation curable inkjet ink preferably includes a polymerizable or polymeric tertiary amine co-initiator.

Preferred diffusion hindered co-initiators are the polymerizable co-initiators disclosed in EP 2053101 A (AGFA) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 A (AGFA) .

The free radical radiation curable inkjet ink preferably includes the (diffusion hindered) co-initiator in an amount of 0.1 to 50 wt%, more preferably in an amount of 0.5 to 25 wt%, most preferably in an amount of 1 to 15 wt% of the

total weight of the free radical radiation curable inkjet ink.

Polymerization Inhibitors

The radiation curable inkjet ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total (inkjet) ink.

Surfactants

The radiation curable brown inkjet ink may contain at least one surfactant. The surfactant can be anionic, cationic, non-ionic, or zwitter-ionic and is preferably added in a total quantity less than 3 wt% based on the total weight of the ink and particularly in a total less than 1wt% based on the total weight of the free radical curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™ RC711 from EVONIK; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by Chisso Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by Gelest, Inc..

Preparation of Inkjet Inks

The preparation of pigmented radiation curable inkjet inks is well-known to the skilled person. Preferred methods of preparation are disclosed in paragraphs [0076] to [0085] of WO 2011/069943 (AGFA).

Inkjet printing methods

An inkjet printing method according to a preferred embodiment of the invention includes the steps of: a) jetting ink dots of a radiation curable brown inkjet ink as defined above on a substrate; and b) at least partially curing the jetted ink dots of the radiation curable brown inkjet ink. The at least partially curing of the radiation curable brown inkjet ink is preferably performed using one or more UV LEDs.

Printing Devices

The radiation curable brown inkjet ink may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based

on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the substrate surface is transported under the inkjet print heads.

Curing devices

The radiation curable brown inkjet ink according to the present invention can be cured by exposure to actinic radiation, preferably to ultraviolet radiation.

In inkjet printing, the curing means may be arranged in combination with the print head of the inkjet printer, travelling therewith so that the curing radiation is applied very shortly after jetting. Such rapid curing is sometimes referred to as "pin curing" and used for enhancing image quality by controlling the dot size. Preferably such curing means consists of one or more UV LEDs. In such an arrangement, it can be difficult to provide other types of curing means that are small enough to be connected to and travelling with the print head. Therefore, a static fixed radiation source may be employed, e.g. a source of curing UV-light, connected to the radiation source by means of flexible radiation conductive means such as a fiber optic bundle or an internally reflective flexible tube. Alternatively, the actinic radiation may be supplied from a fixed source to the radiation head by an arrangement of mirrors including a mirror upon the print head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

- UV-A: 400 nm to 320 nm
- UV-B: 320 nm to 290 nm
- UV-C: 290 nm to 100 nm.

In a preferred embodiment, the inkjet printing device contains one or more UV LEDs with a wavelength larger than 360 nm, preferably one or more UV LEDs with a wavelength larger than 380 nm, and most preferably UV LEDs with a wavelength of about 395 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

Substrates

There is no real limitation on the type of substrate. The substrates may have ceramic, metallic, wood, paper or polymeric surfaces for printing. The substrate may also be primed, e.g. by a white primer or ink.

The substrate may be porous, as e.g. textile, paper and card board substrates, or substantially non-absorbing substrates such as e.g. a plastic substrate having a polyethyleneterephthalate surface.

Preferred substrates including surfaces of polyethylene, polypropylene, polycarbonate, polyvinyl chloride, polyesters like polyethylene terephthalate (PET), polyethylene naphthalate (PEN) and polylactide (PLA) and polyimide. Instead of polymeric laminates also aluminium-based laminates may be used.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The substrates may be transparent, translucent or opaque. Preferred opaque substrates includes so-called synthetic paper, like the Synaps™ grades from Agfa-Gevaert which are an opaque polyethylene terephthalate sheet having a density of 1.10 g/cm$^3$ or more.

There is no restriction on the shape of the substrate. It can be a flat sheet, such a paper sheet or a polymeric film or it can be a three dimensional object like e.g. a plastic coffee cup. If foodstuffs or pharmaceuticals are to be included as content of the three dimensional object, than preferably diffusion hindered photoinitiators and purified monomers and oligomers are used.

The three dimensional object can also be a container like a bottle or a jerry-can for including e.g. oil, shampoo, insecticides, pesticides, solvents, paint thinner or other type of liquids.

In a preferred embodiment, the substrate is a packaging material, more preferably a food packaging, such as a wrapping for a chocolate bar, or a pharma packaging. In a very preferred embodiment, the substrate is a food packaging carrying cured ink dots of the radiation curable brown inkjet ink. The radiation curable brown inkjet ink is preferably used for the food packaging, but can also be used for the secondary packaging, e.g. an cardboard inlay in a box containing primary packaging, or even for the tertiary packaging.

## EXAMPLES

<u>Materials</u>

All materials used in the following examples were readily available from standard sources such as Sigma-Aldrich (Belgium) and Acros (Belgium) unless otherwise specified.

**PB15:4** is a C.I. Pigment Blue 15:4 pigment for which Sun Fast™ Blue 15:4 from SUN CHEMICAL was used.

**PV19** is a C.I. Pigment Violet 19 pigment for which SUN QUINDO RED 19 PV 19 from SUN CHEMICAL was used.

**PY150** is a C.I. Pigment Yellow 150 pigment for which Cromophtal yellow LA2 from BASF was used.

**SB550** is a carbon black pigment for which **Special Black™ 550** from EVONIK (DEGUSSA) was used.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.

**IC819** is a bis(2,4,6-trimethylbenzoyl)-phenylphosphineoxide photoinitiator available as Irgacure™ 819 from BASF.

**STAB UV10** is 4-hydroxy-2,2,6,6-tetramethylpiperidinooxy sebacate available as Irgastab™ UV 10 from BASF.

**Omnipol™ TX** is the di-ester of carboxymethoxy-thioxanthone and polytetramethyleneglycol 250, Average MW of 790 and available from IGM Resins, Waalwijk, NL.

**AXANTH** is a polymerizable thioxanthone according to Formula (AX-1):

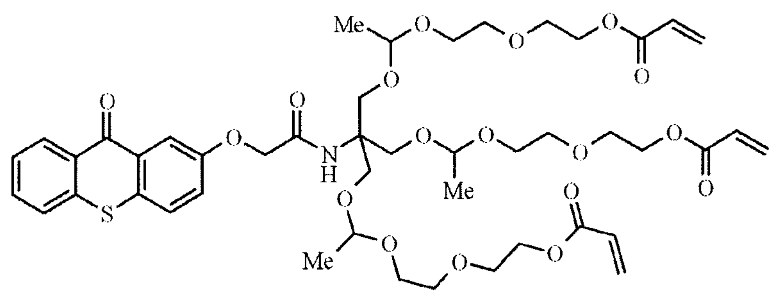

Formula (AX-1).

This photoinitiator was synthesized as follows:

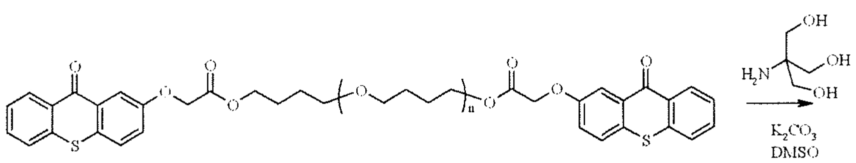

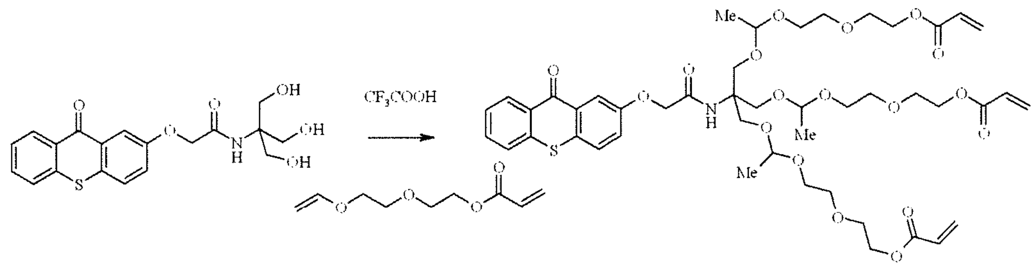


**Step 1 : the aminolysis of Omnipol™ TX**

395 g Omnipol™ TX, supplied by IGM, was dissolved in 1850 ml dimethyl sulfoxide. The reaction mixture was heated to 60°C and 363 g (3 mol) tris(hydroxymethyl)aminomethane and 415 g (3 mol) potassium carbonate were added. The reaction was allowed to continue for 2 hours at 60°C. The reaction mixture was allowed to cool down to room temperature. The precipitated salts were removed by filtration and the reaction mixture was added to a mixture of 1500 ml water and 250 ml acetone. The intermediate thioxanthone precipitated from the medium, was isolated by filtration and dried. The crude thioxanthone was treated with 1500 ml acetone, isolated by filtration and dried. 260 g of the thioxanthone was isolated (TLC-analysis : RP-C18 (Partisil™ KC18F, supplied by Whatman), eluent MeOH / 0.5 M NaCl, $R_f$ = 0.55). TLC analysis showed the presence of a small amount of an isomeric structure ($R_f$ = 0.60). The following structure was assigned to the isomer:

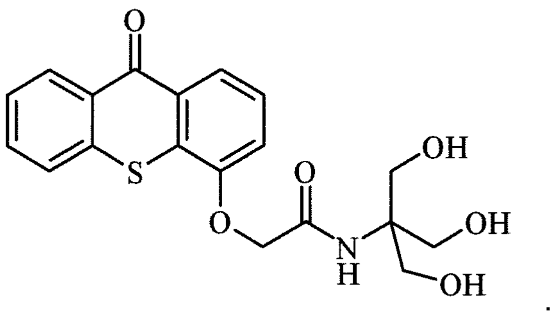

The intermediate was further used as a mixture of the main isomer and the minor isomer.

**Step 2 : the addition to VEEA :**

22 g (58 mmol) of the amido-trihydroxy-thioxanthone was added to 227.8 g (1.224 mol) VEEA. 0.13 g (86 µl, 1.16 mmol) trifluoroacetic acid and 0.25 g (1.16 mmol) BHT were added and the mixture was heated to 77°C. The reaction was allowed to continue at 77°C for 16 hours. The reaction was allowed to cool down to room temperature and 20 g of activated Lewatit M600 MB was added. The mixture was stirred for four hours at room temperature. The ion exchanger was removed by filtration. AX-1 was used as a solution in VEEA. (TLC-analysis : RP-C18 (Partisil™ KC18F, supplied by Whatman), eluent: MeOH/0.5 M NaCl 80/20, $R_f$ = 0.18). Based on $^1$H-NMR analysis, the solution contained 19 wt% AX-1.

**INHIB** is a mixture forming a polymerization inhibitor having a composition according to Table 1.

**Table 1**

| Component | wt% |
|---|---|
| DPGDA | 82.4 |
| p-methoxyphenol | 4.0 |
| 2,6-di-tert-butyl-4-methylphenol | 10.0 |
| Cupferron™ AL | 3.6 |

**Cupferron™ AL** is aluminum N-nitrosophenylhydroxylamine from WAKO CHEMICALS LTD.

**Genopol AB-1** is a polymeric aminobenzoate derivative supplied by Rahn AG.

**VEEA** is 2-(vinylethoxy)ethyl acrylate available from NIPPON SHOKUBAI, Japan.

**15EO-TMPTA** is an ethoxylated (15) trimethylolpropane triacrylate containing fifteen ethoxy units having a molecular weight of 956 and available as Sartomer™ SR9035 from SARTOMER.

**DPGDA** is dipropyleneglycoldiacrylate from SARTOMER.

**BYK™ 333** is a polyether modified polydimethylsiloxane from BYK Chemie GmbH.

**PGA** is a 140 g/m$^2$ white paper substrate coated on both sides with 20 g/m$^2$ of polyethylene available from Mondi Belcoat NV Coating division by using order code 6001764.

Measurement Methods

1. Viscosity

The viscosity of the inkjet ink was measured using a Brookfield DV-II+ viscometer at 45°C at 12 rotations per minute (RPM) using a CPE 40 spindle. This corresponds to a shear rate of 30 s$^{-1}$.

2. Surface Tension

The static surface tension of the radiation curable inks was measured with a KRÜSS tensiometer K9 from KRÜSS GmbH, Germany at 25°C after 60 seconds.

3. Average Particle Size

The particle size of pigment particles in the inkjet ink was determined by photon correlation spectroscopy at a wavelength of 633 nm with a 4mW HeNe laser on a diluted sample of the ink. The particle size analyzer used was a MalvernTM nano-S available from Goffin-Meyvis.

The sample was prepared by addition of one drop of inkjet ink to a cuvette containing 1.5 mL ethyl acetate and mixed until a homogenous sample was obtained. The measured particle size is the average value of 3 consecutive measurements consisting of 6 runs of 20 seconds.

4. Flexibility

The flexibility was determined using a custom built apparatus for stretching a strip having a length of 8cm and a width of 1 cm obtained from the coated sample using a cutter. The strip was mounted between a first fixed wall and a second wall which could be horizontally deplaced by rotation of a handle.

The strip was elongated from an original length L1 of 5 cm to the length L2 at which the strip ruptured. The elongation was calculated as a percentage according to Formula (III):

$$\text{Elongation}(\%) = (L2 - L1 / L1) \times 100 \qquad \text{Formula (III).}$$

The larger the elongation(%), the better the flexibility

5. CIELAB

The reflectance spectrum of a printed sample was measured three times with a Gretag SPM50 spectrophotometer in the range from 380 up to 730 nm in steps of 10 nm. The CIE L* a* b* coordinates as well as chroma C* and hue angle H* were calculated for a 2° observer and a D50 light source.

**EXAMPLE 1**

This example illustrates a radiation curable brown inkjet ink containing a mixture of colour pigments but lacking a brown pigment, which is also suitable as a low migration inkjet ink for food packaging.

Preparation of Radiation Curable Brown Inkjet Ink

First concentrated pigment dispersions CPD-1, CPM-1, CPY-1 and CPK-1 were prepared.

Preparation of Concentrated Cyan Pigment Dispersion CPC-1

A 30 wt% solution of DB162 in VEEA was prepared. 7.5 kg PB15:4 was added to a mixture of 16 kg VEEA, 25 kg of the DB162 solution and 50 g STAB UV10, while stirring with a DISPERLUX™ dispenser. Stirring was continued for 30 minutes. The vessel was connected to a Dynomill™ KD6 mill from the company Willy A. Bachofen (Switzerland) , preloaded with 1.5 kg VEEA and filled for 52 % with 0.4 mm yttrium stabilized zirconia beads ("high wear resistant zirconia grinding media" from TOSOH Co.). The mixture was circulated over the mill at a flow rate of 1.5 l/min and a rotation speed in the mill of about 16 m/s for a residence time of 22.5 minutes. After milling, the dispersion was discharged and filtered through a 1 μm Whatman™ filter. The resulting concentrated pigment dispersion CPC-1 according to Table 2 exhibited an average particle size of 88 nm and a viscosity of 77 mPa.s measured at 25°C using a Haake™ Rotovisco at a shear rate of 10 $s^{-1}$.

**Table 2**

| Component | wt% |
|---|---|
| **PB15:4** | 15.0 |
| **DB162** | 15.0 |
| **STAB UV10** | 0.1 |
| **VEEA** | 69.9 |

Preparation of Concentrated Magenta Pigment Dispersion CPM-1

A 30 wt% solution of DB162 in VEEA was prepared. 12 kg PV19 was added to a mixture of 26.5 kg VEEA, 40 kg of the DB162 solution and 800 g INHIB, while stirring with a DISPERLUX™ dispenser (from DISPERLUX S.A.R.L., Luxembourg). Stirring was continued for 30 minutes. The vessel was connected to a DYNO™-MILL ECM Pilot mill from the company Willy A. Bachofen (Switzerland), preloaded with VEEA and filled for 42 % with 0.4 mm yttrium stabilized zirconia beads ("high wear resistant zirconia grinding media" from TOSOH Co.). The mixture was circulated over the mill at a flow rate of 8 ml/min and a rotation speed in the mill of about 15 m/s for a residence time of 35 minutes. During the complete milling procedure the content in the mill was cooled to keep the temperature below 40°C. After milling, the dispersion was discharged and filtered through a 1 μm Whatman™ filter. The resulting concentrated pigment dispersion CPM-1 according to Table 3 exhibited an average particle size of 153 nm and a viscosity of 105 mPa.s measured at 25°C using a Haake™ Rotovisco at a shear rate of 10 $s^{-1}$.

**Table 3**

| Component | wt% |
|---|---|
| **PV19** | 15.0 |
| **DB162** | 15.0 |
| **INHIB** | 1.0 |
| **VEEA** | 69.0 |

Preparation of Concentrated Yellow Pigment Dispersion CPY-1

A 30 wt% solution of DB162 in VEEA was prepared. 7.5 kg PY150 was added to a mixture of 16 kg VEEA, 25 kg of the DB162 solution and 500 g INHIB, while stirring with a DISPERLUX™ dispenser (from DISPERLUX S.A.R.L., Luxembourg). Stirring was continued for 30 minutes. The vessel was connected to a DYNO™-MILL ECM Pilot mill from the company Willy A. Bachofen (Switzerland), preloaded with VEEA and filled for 42 % with 0.4 mm yttrium stabilized zirconia beads ("high wear resistant zirconia grinding media" from TOSOH Co.). The mixture was circulated over the mill at a flow rate of 8 ml/min and a rotation speed in the mill of about 15 m/s for a residence time of 25 minutes. During the complete milling procedure the content in the mill was cooled to keep the temperature below 40°C. After milling, the dispersion was discharged and filtered through a 1 μm Whatman™ filter. The resulting concentrated pigment dispersion CPY-1 according to Table 4 exhibited an average particle size of 156 nm and a viscosity of 168 mPa.s measured at 25°C using a Haake™ Rotovisco at a shear rate of 10 $s^{-1}$.

**Table 4**

| Component | wt% |
|---|---|
| **PY150** | 15.0 |
| **DB162** | 15.0 |
| **INHIB** | 1.0 |
| **VEEA** | 69.0 |

Preparation of Concentrated Black Pigment Dispersion CPK-1

A 30 wt% solution of DB162 in VEEA was prepared. 1 wt% INHIB was added. 1.103 kg SB550 and 0.397 kg PB15:4 were added to a mixture of 1.95 kg VEEA, 2.5 kg of the DB162 solution and 50 g INHIB, while stirring with a DISPERLUX™ disperser (from DISPERLUX S.A.R.L., Luxembourg). Stirring was continued for 30 minutes. The vessel was connected to a DYNO™-MILL ECM Pilot mill from the company Willy A. Bachofen (Switzerland), preloaded with 1.5 kg 2-(2'-vinyloxyethoxy)ethylacrylate and filled for 42 % with 0.4 mm yttrium stabilized zirconia beads ("high wear resistant zirconia grinding media" from TOSOH Co.). The mixture was circulated over the mill for 3 hours 55 minutes at a flow rate of 1.5 l/min and a rotation speed in the mill of about 13 m/s. During the milling procedure, an additional 2.5 kg of the DB162 solution was added. During the complete milling procedure the content in the mill was cooled to keep the temperature below 40°C. After milling, the dispersion was discharged and filtered through a 1 μm Whatman™ filter. The resulting concentrated pigment dispersion CPY-1 according to Table 5 exhibited an average particle size of 96 nm and a viscosity of 61 mPa.s measured at 25°C using a Haake™ Rotovisco at a shear rate of 10 s-

**Table 5**

| Component | wt% |
|---|---|
| **SB550** | 11 |
| **PB15:4** | 4 |
| **DB162** | 15 |
| **INHIB** | 1 |
| **VEEA** | 69 |

The above prepared concentrated pigment dispersions CPD-1, CPM-1, CPY-1 and CPK-1 were combined with the ink components according to Table 6 in order to prepare the radiation curable brown inkjet ink INK-1. The weight percentage (wt%) of each ink component is based on the total weight of the ink INK-1.

**Table 6**

| Ink components of INK-1 | wt% |
|---|---|
| **CPC-1** | 1.70 |
| **CPM-1** | 13.41 |
| **CPK-1** | 5.50 |
| **CPY-1** | 5.20 |
| **VEEA** | 30.96 |
| **15EO-TMPTA** | 10.00 |
| **AXANTH** | 25 |
| **IC819** | 3.00 |
| **Genopol AB-1** | 5.00 |
| **STAB UV10** | 0.20 |

(continued)

| Ink components of INK-1 | wt% |
|---|---|
| BYK™ 333 | 0.03 |

Evaluation and Results

The surface tension and viscosity of the radiation curable brown inkjet ink INK-1 was measured and found to be respectively 26 mN/m at 25°C and 11.6 mPa.s at 45°C, making the ink suitable for inkjet printing.

The radiation curable brown inkjet ink INK-1 was coated at a thickness of 10 µm on a paper substrate PGA using a bar coater. The coated sample was fully cured using a Fusion DRSE-120 conveyer, equipped with a Fusion VPS/I600 lamp (D-bulb), which transported the sample twice under the UV-lamp at half power on a conveyer belt at a speed of 20 m/min.

The measured CIE lab parameters of the PGA substrate and the INK-1 coated PGA substrate are shown in Table 7.

**Table 7**

| CIE lab values | PGA | INK-1 coated PGA |
|---|---|---|
| L* | 96.31 | 30.62 |
| a* | 0.10 | 23.30 |
| b* | -0.84 | 17.43 |

The colour was excellent for reproducing the colour of chocolate.

The suitability of the radiation curable brown inkjet ink INK-1 as a low migration inkjet ink for use on food packaging was evaluated using a more critical UV LED curing.

The radiation curable brown inkjet ink INK-1 was coated at a thickness of 10 µm on a 50 µm thick PET film using a bar coater. The coated sample was fully cured using an in house developed conveyer, equipped with a 8 Watt LED emitting at 385 nm from Phoseon, which transported the sample four times under the UV-LED on a conveyer belt at a speed of 10 m/min.

A circular sample having a diameter of 3 cm was punched out from the cured coated sample and was put into a glass bottle that was closed and the sample was extracted with 2.5 ml acetonitrile, using ultrasound for 30 minutes. The solution was filtered over a 0.2 µm filter.

HPLC-UV method

A 15 µl sample was injected in HPLC for quantification of the different ink compounds, without any further dilution and/or concentration step (except for Cupferron™ AI, a compound in INHIB: enrichment by factor 10 performed on 6 mL C18 column).

The chromatographic method used an Altima™ C18 5µm column (150 x 3.2 mm) supplied by Alltech. A flow rate of 0.5 ml/min was used at a temperature of 40 °C.

The HPLC method used for all samples had an applied gradient with an end run = 38 min as given in Table 8 wherein eluent A was water and eluent B was acetonitrile. Detection was performed using UV-diode array detection (DAD).

**Table 8**

| Time (min) | % eluent A | % eluent B |
|---|---|---|
| 0 | 55 | 45 |
| 6 | 55 | 45 |
| 11 | 0 | 100 (linear gradient) |
| 30 | 0 | 100 |
| 31 | 55 | 45 |
| 38 | 55 | 45 |

The migrated amounts of the different ink compounds were assessed. 10 ppb is considered the safe threshold for specific migration for any non-CMR compound, regardless of the availability of toxicology data. The specific migration results are shown in Table 9. The value "< 10 ppb" means that the ink component could not be detected, and even if it would be nevertheless present, it will be below 10 ppb.

**Table 9**

| Ink components of INK-1 | ppb (microgram/liter water) |
|---|---|
| **PB15:4** | <10 ppb (pigment) |
| **PV19** | <10 ppb (pigment) |
| **PY150** | <10 ppb (pigment) |
| **SB550** | <10 ppb (pigment) |
| **DB162** | <10 ppb (polymeric) |
| **VEEA** | 1.8 ppb |
| **15EO-TMPTA** | <10 ppb |
| **AXANTH** | < 10 ppb |
| **IC819** | 6.5 ppb |
| **Genopol AB-1** | <10 ppb |
| **STAB UV10** | < 10 ppb |
| **INHIB** | < 10 ppb |
| **BYK™ 333** | <10 ppb (polymeric) |

From Table 9, It is clear that all ink components remained below the 10 ppb threshold. It should be noted that some compounds have higher allowable specific migration limits than the 10 ppb threshold as for example described the Swiss ordinance on materials and articles SR 817.023.21.

**EXAMPLE 2**

This example illustrates the advantages of using a single brown ink containing a mixture of colour pigments instead of using CMYK inkjet inks containing the same colour pigments as the brown ink in order to reproduce a brown colour.

Evaluation and Results

An A4-size brown rectangle R1 having a similar brown colour as in Example 1 was printed on a Metamark™ Digital Vinyl using :Anapurna M-series G2 inks on an :Anapurna Mw UV-printer from Agfa Graphics. The total ink lay down of 238% consisted of 13% cyan ink, 40% magenta ink, 100% yellow ink en 85% black ink. A 100% ink lay down corresponds to a full surface coverage with ink printed by the :Anapurna Mw UV-printer.

A radiation curable brown inkjet ink INK-2 was prepared using the CMYK inks of the :Anapurna M-series G2 inks in the same ratio as the ink lay down for the A4 -size brown print. The exact composition of INK-2 is shown in Table 10 wherein the weight percentages (wt%) are based on the total weight of the brown ink INK-2.

**Table 10**

| wt% of :Anapurna M-series G2 ink | INK-2 |
|---|---|
| C | 5.5 wt% |
| M | 16.8 wt% |
| Y | 42.0 wt% |
| K | 35.7 wt% |

The black ink print head was cleaned with Agfa™ Anapurna M Flushing Solution G1, and then filled with the radiation curable brown inkjet ink INK-2. A wedge having 3cm x 3 cm brown squares for an ink lay down ranging from 1% to 70% in steps of 1% was printed on a Metamark™ Digital Vinyl using the radiation curable brown inkjet ink INK-2. The brown squares were compared with the A4-size brown rectangle R1 printed using the using the CMYK inks of the :Anapurna M-series G2 ink. It was found that the square with an ink lay down of 43% (lightness value L of 27.70) best matched the A4-size brown rectangle R1 (lightness value L of 26.71).

Using the printer settings for the square with an ink lay down of 43%, a second A4-size brown rectangle R2 was printed on a Metamark™ Digital Vinyl now using the radiation curable brown inkjet ink INK-2 on an :Anapurna Mw UV-printer. The A4-size brown rectangle R2 had a lightness value of 27.39.

The thickness of the printed rectangles R1 and R2 was determined by measuring the thickness in an area of the Metamark™ Digital Vinyl substrate lacking any ink and subtracting it from the thickness measured in an area of the Metamark™ Digital Vinyl substrate printed with the brown rectangle. Then strips having a length of 8cm and a width of 1 cm were cut from the area printed with the brown rectangles R1 and R2 and tested for flexibility. The results are shown in Table 11 .

**Table 11**

| Printed Sample | Thickness ink layer | Flexibility |
|---|---|---|
| **Rectangle R1 (CMYK inks)** | 21 μm | 42% |
| **Rectangle R2 (brown INK-2)** | 9 μm | 51% |

From the results in Table 11, it can be seen that a radiation curable brown inkjet ink allows to produce thinner layers resulting in higher flexibility than if the image was printed the four common inks (CMYK). Flexibility is especially important on food packaging such as a chocolate bar wrapper which is torn and twisted on opening. Another advantage of using a single brown ink is the sharpness of text printed on the chocolate bar wrapper, which is already clearly visible from comparing only the edges of the rectangles R1 and R2 printed on the :Anapurna Mw UV-printer. The edge of rectangle R2 is visually much sharper than the edge of rectangle R1.

## Claims

1. A radiation curable brown inkjet ink for food packaging purposes containing a mixture of colour pigments but lacking a brown pigment; and including at least one photoinitiator selected from the group consisting of polymerizable photoinitiators, polymeric photoinitiators and multifunctional photoinitiators.

2. The radiation curable brown inkjet ink according to claim 1, wherein the mixture of colour pigments includes a cyan pigment, a magenta pigment, a yellow pigment and a black pigment.

3. The radiation curable brown inkjet ink according to claim 1 or 2, wherein the mixture of colour pigments includes at least one of a quinacridone and a diketopyrrolo pyrrole pigment.

4. The radiation curable brown inkjet ink according to any of claim 1 to 3, wherein the mixture of colour pigments includes at least one yellow pigment selected from the group consisting of C.I. Pigment Yellow 120, C.I. Pigment Yellow 150, C.I. Pigment Yellow 155 and C.I. Pigment Yellow 180.

5. The radiation curable brown inkjet ink according to any of claim 1 to 4, wherein the radiation curable brown inkjet ink includes at least one monomer selected from the group consisting of 2-(vinylethoxy)ethyl acrylate, N-vinyl caprolactam, phenoxyethyl acrylate, dipropyleneglycoldiacrylate, ethoxylated trimethylolpropane triacrylate and cyclic trimethylolpropane formal acrylate.

6. The radiation curable brown inkjet ink according to any of claim 1 to 5, wherein the radiation curable brown inkjet ink includes a polymerizable or polymeric thioxanthone photoinitiator and an acylphosphine oxide-based polymerization photoinitiator.

7. A radiation curable inkjet ink set including the radiation curable brown inkjet ink according to any one of claims 1 to 6.

8. The radiation curable inkjet ink set according to claim 7, including at least a cyan radiation curable inkjet ink, a

magenta radiation curable inkjet ink, a yellow radiation curable inkjet ink and a black radiation curable inkjet ink.

**9.** The radiation curable inkjet ink set according to claim 7 or 8, wherein two or more of the colour pigments in the radiation curable brown inkjet ink are present in two or more of the non-brown inkjet inks of the radiation curable inkjet ink set.

**10.** The radiation curable inkjet ink set according to anyone of claims 7 to 9, wherein all the colour pigments of the radiation curable brown inkjet ink are present in two or more of the non-brown inkjet inks of the radiation curable inkjet ink set.

**11.** A food packaging carrying cured ink dots of the radiation curable brown inkjet ink according to any one of claims 1 to 6.

**12.** An inkjet printing method including the steps of:

a) jetting ink dots of a radiation curable brown inkjet ink according to any one of claim 1 to 6 on a substrate; and
b) at least partially curing the jetted ink dots of the radiation curable brown inkjet ink.

**13.** The inkjet printing method according to claim 12 wherein the at least partially curing of the radiation curable brown inkjet ink is performed using one or more UV LEDs.

**Patentansprüche**

**1.** Eine strahlungshärtbare braune Tintenstrahltinte für Lebensmittelverpackungszwecke, enthaltend ein Gemisch aus Farbpigmenten, aber ohne braunes Pigment, und enthaltend mindestens einen Fotoinitiator, ausgewählt aus der Gruppe bestehend aus polymerisierbaren Fotoinitiatoren, polymeren Fotoinitiatoren und multifunktionellen Fotoinitiatoren.

**2.** Die strahlungshärtbare braune Tintenstrahltinte nach Anspruch 1, wobei das Gemisch aus Farbpigmenten ein Cyanpigment, ein Magentapigment, ein gelbes Pigment und ein schwarzes Pigment enthält.

**3.** Die strahlungshärtbare braune Tintenstrahltinte nach Anspruch 1 oder 2, wobei das Gemisch der Farbpigmente mindestens ein Pigment aus der Gruppe bestehend aus einem Chinacridonpigment und einem Diketopyrrolopyrrolpigment enthält.

**4.** Die strahlungshärtbare braune Tintenstrahltinte nach einem der Ansprüche 1 bis 3, wobei das Gemisch der Farbpigmente mindestens ein gelbes Pigment, ausgewählt aus der Gruppe bestehend aus C.I. Pigment Yellow 120, C.I. Pigment Yellow 150, C.I. Pigment Yellow 155 und C.I. Pigment Yellow 180, enthält.

**5.** Die strahlungshärtbare braune Tintenstrahltinte nach einem der Ansprüche 1 bis 4, wobei die strahlungshärtbare braune Tintenstrahltinte mindestens ein Monomer, ausgewählt aus der Gruppe bestehend aus 2-(Vinylethoxy)-ethylacrylat, N-Vinylcaprolactam, Phenoxyethylacrylat, Dipropylenglycoldiacrylat, ethoxyliertem Trimethylolpropantriacrylat und cyclischem Trimethylolpropanformalacrylat, enthält.

**6.** Die strahlungshärtbare braune Tintenstrahltinte nach einem der Ansprüche 1 bis 5, wobei die strahlungshärtbare braune Tintenstrahltinte einen polymerisierbaren oder polymeren Thioxanthonfotoinitiator und einen Polymerisationsfotoinitiator auf Basis von Acylphosphinoxid enthält.

**7.** Ein Satz strahlungshärtbarer Tintenstrahltinten, enthaltend die strahlungshärtbare braune Tintenstrahltinte nach einem der Ansprüche 1 bis 6.

**8.** Der Satz strahlungshärtbarer Tintenstrahltinten nach Anspruch 7, enthaltend mindestens eine strahlungshärtbare Cyantintenstrahltinte, eine strahlungshärtbare Magentatintenstrahltinte, eine strahlungshärtbare gelbe Tintenstrahltinte und eine strahlungshärtbare schwarze Tintenstrahltinte.

**9.** Der Satz strahlungshärtbarer Tintenstrahltinten nach Anspruch 7 oder 8, wobei zwei oder mehr der Farbpigmente in der strahlungshärtbaren braunen Tintenstrahltinte in zwei oder mehr der nicht-braunen Tintenstrahltinten des Satzes strahlungshärtbarer Tintenstrahltinten enthalten sind.

**10.** Der Satz strahlungshärtbarer Tintenstrahltinten nach einem der Ansprüche 7 bis 9, wobei alle Farbpigmente der strahlungshärtbaren braunen Tintenstrahltinte in zwei oder mehr der nicht-braunen Tintenstrahltinten des Satzes strahlungshärtbarer Tintenstrahltinten enthalten sind.

**11.** Eine Lebensmittelverpackung, auf der gehärtete Tintenpunkte der strahlungshärtbaren braunen Tintenstrahltinte nach einem der Ansprüche 1 bis 6 vorliegen.

**12.** Ein Tintenstrahldruckverfahren, das die folgenden Schritte umfasst:

a) Aufspritzen von Tintenpunkten einer strahlungshärtbaren braunen Tintenstrahltinte nach einem der Ansprüche 1 bis 6 auf ein Substrat, und
b) mindestens teilweises Härten der aufgespritzten Tintenpunkte der strahlungshärtbaren braunen Tintenstrahltinte.

**13.** Das Tintenstrahldruckverfahren nach Anspruch 12, wobei das mindestens teilweise Härten der strahlungshärtbaren braunen Tintenstrahltinte mittels einer oder mehrerer UV-LEDs erfolgt.

## Revendications

**1.** Encre pour impression à jet d'encre brune durcissable par rayonnement utilisée à des fins d'emballage pour aliments, contenant un mélange de pigments colorés, mais sans pigment brun, et contenant au moins un photoinitiateur choisi parmi le groupe composé de photoinitiateurs polymérisables, de photoinitiateurs polymères et de photoinitiateurs multifonctionnels.

**2.** Encre pour impression à jet d'encre brune durcissable par rayonnement selon la revendication 1, **caractérisée en ce que** le mélange de pigments colorés contient un pigment cyan, un pigment magenta, un pigment jaune et un pigment noir.

**3.** Encre pour impression à jet d'encre brune durcissable par rayonnement selon la revendication 1 ou 2, **caractérisée en ce que** le mélange de pigments colorés contient au moins un pigment de quinacridone et un pigment de dicétopyrrolopyrrole.

**4.** Encre pour impression à jet d'encre brune durcissable par rayonnement selon l'une quelconque des revendications 1 à 3, **caractérisée en ce que** le mélange de pigments colorés contient au moins un pigment jaune choisi parmi le groupe composé de C.I. Pigment Yellow 120, C.I. Pigment Yellow 150, C.I. Pigment Yellow 155 et C.I. Pigment Yellow 180.

**5.** Encre pour impression à jet d'encre brune durcissable par rayonnement selon l'une quelconque des revendications 1 à 4, **caractérisée en ce que** l'encre pour impression à jet d'encre brune durcissable par rayonnement contient au moins un monomère choisi parmi le groupe composé d'acrylate de 2-(vinyléthoxy)-éthyle, de N-vinylcaprolactame, d'acrylate de phénoxyéthyle, de diacrylate de dipropylèneglycol, de triacrylate de triméthylolpropane éthoxylé et d'acrylate de triméthylolpropaneformal cyclique.

**6.** Encre pour impression à jet d'encre brune durcissable par rayonnement selon l'une quelconque des revendications 1 à 5, **caractérisée en ce que** l'encre pour impression à jet d'encre brune durcissable par rayonnement contient un photoinitiateur de thioxanthone polymérisable ou polymère et un photoinitiateur de polymérisation à base d'oxyde d'acylphosphine.

**7.** Jeu d'encres pour impression à jet d'encre durcissables par rayonnement, comprenant l'encre pour impression à jet d'encre brune durcissable par rayonnement selon l'une quelconque des revendications 1 à 6.

**8.** Jeu d'encres pour impression à jet d'encre durcissables par rayonnement selon la revendication 7, comprenant au moins une encre pour impression à jet d'encre durcissable par rayonnement cyan, une encre pour impression à jet d'encre durcissable par rayonnement magenta, une encre pour impression à jet d'encre durcissable par rayonnement jaune et une encre pour impression à jet d'encre durcissable par rayonnement noire.

**9.** Jeu d'encres pour impression à jet d'encre durcissables par rayonnement selon la revendication 7 ou 8, **caractérisé**

**en ce que** deux ou plus des pigments colorés dans l'encre pour impression à jet d'encre brune durcissable par rayonnement sont contenus dans deux ou plus des encres pour impression à jet d'encre non brunes du jeu d'encres pour impression à jet d'encre durcissables par rayonnement.

**10.** Jeu d'encres pour impression à jet d'encre durcissables par rayonnement selon l'une quelconque des revendications 7 à 9, **caractérisé en ce que** tous les pigments colorés de l'encre pour impression à jet d'encre brune durcissable par rayonnement sont contenus dans deux ou plus des encres pour impression à jet d'encre non brunes du jeu d'encres pour impression à jet d'encre durcissables par rayonnement.

**11.** Emballage pour aliments portant des points d'encre durcis de l'encre pour impression à jet d'encre brune durcissable par rayonnement selon l'une quelconque des revendications 1 à 6.

**12.** Procédé d'impression à jet d'encre comprenant les étapes consistant à:

a) projeter des points d'encre de l'encre pour impression à jet d'encre brune durcissable par rayonnement selon l'une quelconque des revendications 1 à 6 sur un substrat, et
b) durcir au moins partiellement les points d'encre projetés de l'encre pour impression à jet d'encre brune durcissable par rayonnement.

**13.** Procédé d'impression à jet d'encre selon la revendication 12, **caractérisé en ce que** le durcissement au moins partiel de l'encre pour impression à jet d'encre brune durcissable par rayonnement s'effectue au moyen d'une ou de plusieurs diodes électroluminescentes ultraviolettes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2053101 A
- EP 2199273 A
- EP 2161290 A
- US 2011045252 A
- US 2006293412 A
- US 2013063535 A
- US 4105806 A
- DE 19924381 A1
- EP 1669193 A1
- EP 2604663 A1
- WO 2008074548 A
- EP 1911814 A
- EP 1790698 A
- EP 1790696 A
- WO 2007060255 A
- EP 1790695 A
- EP 1790697 A
- US 6310115 B
- US 6767980 B
- EP 2065362 A
- EP 2161264 A
- EP 2053095 A
- US 2006014848 A
- WO 2011069943 A


### Non-patent literature cited in the description


- **HERBST, WILLY et al.** Industrial Organic Pigments, Production, Properties, Applications. Wiley - VCH, 2004
- **CRIVELLO, J.V. et al.** Photoinitiators for Free Radical Cationic and Anionic Photopolymerization. John Wiley and Sons Ltd, 1998, 287-294